# EUROPÄISCHE PATENTSCHRIFT

(11) **EP 2 937 604 B1**
(45) Veröffentlichungstag und Bekanntmachung des Hinweises auf die Patenterteilung: **10.01.2018**
(21) Anmeldenummer: 15001096.5
(22) Anmeldetag: 16.04.2015
(51) Int. Cl.: F16K 1/12

(54) **KOAXIALVENTIL**
COAXIAL VALVE
SOUPAPE COAXIALE

(30) Priorität: 23.04.2014 DE 102014005780
(43) Veröffentlichungstag der Anmeldung: 28.10.2015
(73) Patentinhaber: Airbus DS GmbH, 82024 Taufkirchen (DE)
(72) Erfinder: Günther, Matthias, D-81737 München (DE)
(74) Vertreter: Schicker, Silvia

(56) Entgegenhaltungen:
- DE-A1- 2 014 833
- DE-A1- 19 960 330
- DE-A1-102005 028 584
- GB-A- 1 038 161
- US-A- 3 654 950
- US-A1- 2013 068 976

## Beschreibung

### TECHNISCHES GEBIET

Die vorliegende Erfindung betrifft ein Koaxialventil nach dem Oberbegriff des Patentanspruchs 1.

### HINTERGRUND DER ERFINDUNG

Koaxialventile bestehen aus einem Ventilgehäuse, das zumindest eine Fluideintrittsöffnung und zumindest eine Fluidaustrittsöffnung sowie einen diese miteinander verbindenden Strömungskanal aufweist. Eine rohrförmige Ventilhülse ist in einem Abschnitt des Strömungkanals axial verfahrbar angeordnet und weist eine Einströmöffnung sowie eine Ausströmöffnung für das Fluid auf, die beide in den Strömungskanal münden. Im Ventilgehäuse ist weiterhin ein Verschlusskörper vorgesehen, der koaxial zur Ventilhülse angeordnet ist und der ausgebildet ist, um die Einströmöffnung oder die Ausströmöffnung der Ventilhülse zu verschließen. Des Weiteren ist ein Antrieb zum axialen Verfahren der Ventilhülse vorgesehen. Der Fluiddruck wirkt nicht auf den Antrieb, somit eignet sich dieser Ventiltyp besonders für Hochdruckanwendungen und/oder für große Nennweiten.

### STAND DER TECHNIK

Ein derartiges Koaxialventil ist beispielsweise aus der DE 199 60 330 A1 oder aus der DE 10 2005 028 584 A1 vorbekannt.

Bei dem aus der DE 199 60 330 A1 bekannten Koaxialventil wird die Ventilhülse mittels eines Hebelmechanismus' im Strömungskanal axial verfahren, wobei der Hebelmechanismus von einem seitlichen neben dem Ventilgehäuse angebrachten Antrieb betätigt wird. Dadurch nimmt dieses bekannte Ventil ein großes Bauvolumen ein. Außerdem wird durch das Vorsehen des Hebelmechanismus' das Gewicht des Ventils spürbar erhöht. Des Weiteren bedingt ein solcher Hebelmechanismus, dass die Strukturen sowohl des Ventilgehäuses als auch der Ventilhülse im Bereich der Angriffspunkte des Hebels ausreichend versteift sein müssen, um die erzeugten Kräfte übertragen beziehungsweise abstützen zu können. Auch hierdurch wird das Gewicht des gesamten Ventils deutlich erhöht.
Bei der aus der DE 10 2005 028 584 A1 bekannten Lösung wird die Ventilhülse von einem am Umfang der Hülse angreifenden Spindeltrieb in Axialrichtung bewegt. Je größer der geforderte Ventildurchfluss ist, also je größer der Durchmesser der Ventilhülse ausgebildet ist, umso größer werden die Reibungskräfte im Spindeltrieb, da diese mit größer werdendem Umfang deutlich zunehmen. Das wiederum bedeutet, dass der entsprechende Antriebsmotor stärker und damit schwerer ausgelegt werden muss. Auch im Falle eines pneumatischen Aktuators tritt bei größeren Durchmessern ebenfalls eine höhere Reibung auf.
Bei beiden vorgenannten Ausführungen des Standes der Technik erfolgt die Strömungsumlenkung in einem Bereich um den Verschlusskörper des Ventils herum, was nicht nur dazu führt, dass die Strömungsumlenkung auf einem sehr kurzen Weg stattfindet, was zu hohen Strömungswiderständen führt, sondern was außerdem dazu führt, dass die Baulänge des Ventils zunimmt, da in Axialrichtung gesehen in beiden vorbekannten Lösungen zirka ein Drittel der Ventillänge für die Strömungsumlenkung benötigt wird, während die restlichen zwei Drittel der Ventillänge für den Antrieb der Ventilhülse vorgesehen sind.

US 3,654,950 A offenbart ein Ventil gemäß dem Oberbegriff des Anspruchs 1 mit einem Ventilkörper und mit einer zentralen Öffnung. In der zentralen Öffnung ist eine Ventilhülse verlagerbar aufgenommen. Eine Ausnehmung dient zur Aufnahme eines Elektromotors, der über einen Bolzen mit einer Gewindewelle verbunden ist. Die Welle ist abschnittsweise in einer mit einem Gewinde versehenen Öffnung in der Ventilhülse aufgenommen. Um die Ventilhülse zu bewegen, treibt der Motor die Welle an. Der Elektromotor und die Gewindewelle sind in axialer Richtung hintereinander angeordnet
GB 1 038 161 A offenbart ein Ventil mit einem Gehäuse und Anschlüssen. Zur Verlagerung des Ventilelements ist ein zylindrisches Element, das mit dem Ventilelement über eine Spindel verbunden ist. Ein Einlass für ein druckbeaufschlagtes Fluid kommuniziert mit dem Innenraum des zylindrischen Elements, um das Ventil gegen die Kraft der Feder zu öffnen.

DE 20 14 833 A1 offenbart ein Ventil mit einem Ventilglied, das in einem Einlasskanal angeordnet ist. Das zum Regeln dienende Ventilglied hat die Form einer zylindrischen Hülse und ist zur Axialverstellung mit einer Einstellspindel verbunden. Bohrungen erstrecken sich bis in einen Hohlraum bzw. bis in eine Druckkammer. Die Bohrungen sind mit einem Schaltventil verbunden. Über das Schaltventil kann eine Druckerhöhung in der Druckkammer erzeugt werden, wodurch das Ventilglied entgegen der Kraft einer Feder geöffnet wird.

### DARSTELLUNG DER ERFINDUNG

Aufgabe der vorliegenden Erfindung ist es daher, ein gattungsgemäßes Koaxialventil so auszugestalten, dass es eine wesentlich kompaktere Bauform aufweist.

Diese Aufgabe wird bei einem gattungsgemäßen Koaxialventil mit den Merkmalen des Patentanspruchs 1 gelöst.

Dazu ist die Ventilhülse mit einem axial verfahrbaren Aktuator verbunden, der koaxial zur Ventilhülse angeordnet und vom Antrieb antreibbar ist, wobei der Antrieb koaxial im Strömungskanal angeordnet und von diesem umgeben ist.

### VORTEILE

Diese Integration des Antriebs in das Zentrum des Ventils, nämlich um die Ventilachse herum radial innerhalb des Strömungskanals sorgt für einen besonders kompakten Aufbau des Koaxialventils. Die Anordnung des Strömungskanals um den Antrieb herum ermöglicht zudem, die Strömungsumlenkung über einen relativ langen Abschnitt des Ventils, nämlich den Antriebsabschnitt, in Axialrichtung zu erstrecken, so dass die Strömungsverluste gegenüber dem Stand der Technik wesentlich geringer sind. Das erfindungsgemäße Koaxialventil ist daher nicht nur kompakter aufgebaut, sondern besitzt auch einen geringeren Strömungswiderstand für das das Ventil durchströmende Fluid. Der Aktuator ist als Aktuatorstange ausgebildet. Der Aktuator ist weiterhin vorzugsweise in Axialrichtung federnd gelagert, wobei die Federvorspannung in Richtung auf die Ventilhülse wirkt. Diese axiale Federspannung sorgt dafür, dass die vom Aktuator betätigte Ventilhülse im geschlossenen Zustand des Ventils auch bei Vibrationen oder thermisch bedingten Abmessungsänderungen stets zuverlässig am Verschlusskörper anliegt. Der Antrieb ist von einem Elektromotor gebildet. Der Antrieb weist auch einen Gewindespindeltrieb mit Gleitring oder einen Kugelgewindetrieb oder einen Planetenrollengewindetrieb auf. Ein beliebiger Teil des Aktuators muss verdrehsicher gelagert werden, damit die Rotation in Fahrweg umgewandelt werden kann. Vorzugsweise ist der Aktuator direkt an der Spindel des Gewindespindeltriebs verdrehsicher gelagert.

Eine besonders vorteilhafte Ausführungsform zeichnet sich dadurch aus, dass der Strömungskanal einen bezüglich der Fluideintrittsöffnung radial weiter außen liegenden ringförmigen Kanalabschnitt aufweist, der sich in Axialrichtung entlang des Außenumfangs eines den Antrieb aufnehmenden zentralen Ventilkörpers erstreckt. Diese Variante des erfindungsgemäßen Koaxialventils weist einen besonders geringen Strömungswiderstand auf.

Die Kernidee der vorliegenden Erfindung besteht darin, den Antrieb für die Ventilhülse, also für das bewegbare Verschlusselement des Ventils, radial innerhalb des durch das Ventil hindurchgehenden Strömungskanals vorzusehen. Der Strömungskanal weitet sich daher vor der gesamten Antriebseinheit für den beweglichen Ventilkörper auf, umströmt die Antriebseinheit über den größten Teil der Länge des Ventils und verengt sich erst wieder am anderen Ende der Antriebseinheit kurz vor dem Ventilsitz. Dadurch hat die umgelenkte Strömung ausreichend Raum und Zeit, sich nach der ersten Umlenkung wieder zu beruhigen, bevor sie den zweiten Strömungsumlenkungsabschnitt des Strömungskanals erreicht, wodurch die Strömungsverluste gegenüber dem Stand der Technik mit jeweils einem sehr kurzen Strömungsumlenkungsbereich deutlich herabgesetzt sind.

Durch die Nutzung nahezu der gesamten Ventillänge zur Strömungsumlenkung kann das Ventil etwa 30 % kürzer gebaut werden als im Stand der Technik. Gegenüber dem Stand der Technik sind der Aktuator und die Antriebsteile nach innen um die Ventilachse herum angeordnet und müssen nicht, wie beim Stand der Technik, außen angebaut werden. Dadurch wird auch der für den Einbau des Ventils in Querrichtung zur Achse benötigte Raum um ca. 25 % reduziert. Da die Störmung über einen längeren Bereich des Strömungskanals umgelenkt wird, werden die Strömungsverluste gegenüber dem Stand der Technik deutlich reduziert. Die mechanische Reibung beim Schalten des Ventils, die den größten Teil der Aktuatorkraft ausmacht, wird um ca. 40 % bis 50 % reduziert, da etwa die Hälfte der dynamischen Dichtungen entfallen kann oder diese Dichtungen deutlich kleiner ausfallen können. Die Aktuatorleistung kann durch Reduzierung der Reibung, bedingt durch kleinere Durchmesser, ebenfalls reduziert werden. Durch diese Maßnahmen ist insgesamt eine Gewichtsreduzierung auf etwa 50 % des Gewichts eines Koaxialventils aus dem Stand der Technik möglich.

### KURZE BESCHREIBUNG DER ZEICHNUNGEN

Die Erfindung wird nachfolgend anhand eines Beispiels unter Bezugnahme auf die Zeichnung näher erläutert; in dieser zeigt:

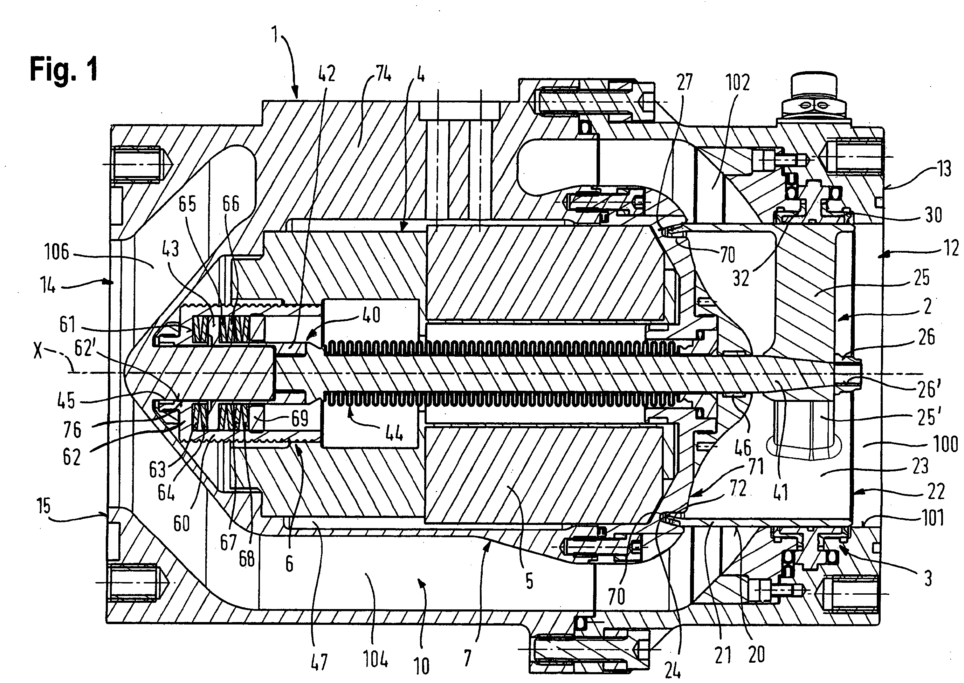

- **Fig. 1**: einen Längsschnitt durch ein erfindungsgemäßes Koaxialventil.

### DARSTELLUNG VON BEVORZUGTEN AUSFÜHRUNGSBEISPIELEN

Fig. 1 zeigt ein erfindungsgemäßes Koaxialventil mit einem im Wesentlichen zylindrischen Ventilgehäuse 1, das in Axialrichtung von einem Strömungskanal 10 durchdrungen ist. Der Strömungskanal 10 bildet an seinem ersten axialen Ende (in Fig. 1 rechts) eine Fluideintrittsöffnung 12 und an seinem anderen axialen Ende (in Fig. 1 links) eine Fluidaustrittsöffnung 14 aus. Die beiden axialen Stirnseiten 13, 15 des Ventilgehäuses 1, in denen die Fluideintrittsöffnung 12 beziehungsweise die Fluidaustrittsöffnung 14 ausgebildet sind, sind als Flansche gestaltet, die mit einem entsprechenden Leitungssystem zum Transport des Fluids verbindbar sind.

Im Strömungskanal 10 ist untermittelbar hinter der Fluideintrittsöffnung 12 eine rohrförmige Ventilhülse 2 vorgesehen, deren Außendurchmesser nur geringfügig kleiner ist als der Innendurchmesser eines hinter der Fluideintrittsöffnung 12 gebildeten zylindrischen Eingangsabschnitts 100 des Strömungskanals 10. In der Innenumfangswand 101 dieses zylindrischen Eingangsabschnitts 100 des Strömungskanals 10 ist eine Dichtungsanordnung 3 vorgesehen, die zwei in Axialrichtung voneinander beabstandete dynamische Dichtungen 30, 32 aufweist, welche die Innenumfangswand 101 des Strömungskanals 10 in diesem Bereich gegen den Außenumfang 20 der Ventilhülse 2 abdichten. Die rohrförmige Ventilhülse 2 ist entlang dieser Dichtungen 30, 32 in Richtung der Ventillängsachse X axial verschiebbar.

Die Ventilhülse 2 umfasst eine rohrförmige Wandung 21, welche einen Fluiddurchtrittsraum 23 umgibt. Der Fluiddurchtrittsraum 23 bildet an der zur Fluideintrittsöffnung 12 weisenden Stirnseite der Ventilhülse 2 eine Einströmöffnung 22 und an der von der Fluideintrittsöffnung 12 weg weisenden Stirnseite der Ventilhülse 2 eine Ausströmöffnung 24 für das Fluid aus.

Ausgehend von der zylindrischen Innenumfangswand 21 der Ventilhülse 2 sind zumindest drei Speichen vorgesehen, von denen in Fig. 1 nur zwei Speichen 25, 25' gezeigt sind, die sich radial einwärts zur Mitte der Ventilhülse 2 hin erstrecken und dort eine Nabe 26 ausbilden. Die Nabe 26 ist mit einer zentralen Bohrung 26' versehen, in die ein Ende einer Betätigungsstange 41 eingesetzt ist, die Teil eines Aktuators 40 zur axialen Verschiebung der Ventilhülse 2 ist. Die Betätigungsstange 41 ist in der Bohrung 26' in Axialrichtung fixiert, so dass die Übertragung von Axialkräften zwischen der Betätigungsstange 41 und der Ventilhülse 2 möglich ist. Ein Faltenbalg 44 umgibt die Betätigungsstange 41 und dichtet diese gegenüber der äußeren Umgebung ab. Die Betätigungsstange 41 ist an ihrem anderen Ende mit einem weiter unten noch beschriebenen Gewindespindeltrieb 6 verbunden und ist mit einem axialbeweglichen Element davon in Gleitlagern 45, 46 in einem zentralen Ventilkörper 7 axialverschiebbar gelagert. Der zentrale Ventilkörper 7 ist über zumindest drei Radialspeichen, von denen hier nur eine Radialspeiche 74 gezeigt ist, mit dem äußeren Ventilgehäuse 1 fest verbunden.

Angetrieben wird der Aktuator 40 und damit die Betätigungsstange 41 und mit ihr die Ventilhülse 2 durch einen im zentralen Ventilkörper 7 angeordneten Antrieb 4. Dieser Antrieb 4 weist einen Elektromotor 5 und den Gewindespindeltrieb 6 auf, welcher vom Elektromotor antreibbar ist. Der Elektromotor 5 und der Gewindespindeltrieb 6 sind koaxial mit der Betätigungsstange 41, diese umgebend, angeordnet.

Ein Innenraum 47 im Inneren des zentralen Ventilkörpers 7, in dem der Antrieb 4 und der Aktuator 40 vorgesehen sind, ist gegenüber dem Strömungskanal 10 abgedichtet. Der Innenraum 47 ist daher im Idealfall nicht von dem im Strömungskanal 10 strömenden Fluid kontaminiert. Um minimale Leckraten auszuschließen, kann eine Spülleitung mit zugeordneten Ventilen vorgesehen sein. Elektrische Zuleitungen zum Antrieb und die Spülleitungen sind durch die Speichen 74 geführt und sind somit nicht dem im Strömungskanal strömenden Fluid ausgesetzt.

Der Gewindespindeltrieb 6 ist im Querschnitt becherartig ausgebildet, wobei in das Innere des becherartigen Gehäuses 60 des Gewindespindeltriebs 6 ein zylindrischer Koppelabschnitt 42 des Aktuators 40 eingreift, welcher mit der Betätigungsstange 41 gekoppelt und in Axialrichtung fest verbunden ist. Der Koppelabschnitt 42 ist an seinem in das Innere des becherartigen Gehäuses 60 eingreifenden Ende mit einem radial nach außen hervorstehenden Umfangsflansch 43 versehen. Zwischen dem Umfangsflansch 43 und dem Boden 62 des becherartigen Gehäuses 60 ist eine Packung Tellerfedern 63, 64 vorgesehen. Auf der von den Tellerfedern 63, 64 abgewandten axialen Stirnseite des Umfangsflansches 43 sind weitere Tellerfedern 65, 66, 67, 68 vorgesehen, die sich gegen einen in der radial inneren Seite 61 der zylindrischen Wand 60 des Bechers verankerten Stützring 69 abstützen. Der zylindrische Koppelabschnitt 42 ist so in beiden Axialrichtungen zwischen den Tellerfedern 63, 64 beziehungsweise 65, 66, 67, 68 fest im becherartigen Gehäuse 60 des Gewindespindeltriebs 6 eingespannt und kann sich nur durch Kompression entsprechender Tellerfedern in Axialrichtung relativ zum Gehäuse 60 bewegen. Der zylindrische Koppelabschnitt 42 ist mit dem freien Ende der Betätigungsstange 41 verbunden.

Das Gleitlager 45 und die Lauffläche 76 des Gehäuses 7, entlang der das becherartige Gehäuse 60 des Gewindespindeltriebs 6 axial verschiebbar ist, sind nicht rotationssymmetrisch ausgeführt (beispielsweise sternförmig oder sechskantförmig) und bilden so eine Verdrehsicherung für die Spindellauffläche 62'. Das Motordrehmoment wird in diesem Bereich auf das Gehäuse 7 übertragen und durch den Gewindespindeltrieb 6 in eine axiale Bewegung des mit dem becherartigen Gehäuse 60 über den zylindrischen Koppelabschnitt 42 verbundenen Aktuators 40 übertragen.

Angetrieben vom Gewindespindeltrieb 6 kann sich der Aktuator 40 mit der Ventilhülse 2 in Axialrichtung bewegen, wo sich durch Bewegung in Fig. 1 nach rechts der innere stirnseitige Rand der zylindrischen Wand 21 der Ventilhülse 2, der eine erste Ventilsitzfläche 27 bildet, von einem von der dortigen Stirnfläche des zentralen Ventilkörpers 7 gebildeten Verschlusskörper 71 abhebt und aus der Anlage an einer in einer Nut 70 des zentralen Ventilkörpers 7 gebildeten zweiten Ventilsitzfläche 72 löst und sich somit das Ventil öffnet.

Der Strömungskanal 10 umgibt den zentralen Ventilkörper 7 entlang von dessen gesamter Länge und verengt sich in einem stromabwärtigen Strömungskanalabschnitt 106 auf den Durchmesser der Fluidaustrittsöffnung 14.

Das durch das Ventil hindurchgeleitete Fluid strömt also in Fig. 1 von rechts nach links durch die Fluideintrittsöffnung 12 und den dortigen zylindrischen Eingangsabschnitt 100 des Strömungskanals 10, durch die Einströmöffnung 22 der Ventilhülse 2, durch den Fluiddurchtrittsraum 23 der Ventilhülse 2, durch die Ausströmöffnung 24 der Ventilhülse 2 in den sich radial erweiternden Abschnitt 102 des Strömungskanals 10, durch den den zentralen Ventilkörper 7 umgebenden ringzylindrischen Abschnitt 104 des Strömungskanals 10, durch den sich wieder radial einwärts verjüngenden Abschnitt 106 des Strömungskanals 10 und dann durch die Fluidaustrittsöffnung 14 wieder aus dem Koaxialventil hinaus.

Bezugszeichen in den Ansprüchen, der Beschreibung und den Zeichnungen dienen lediglich dem besseren Verständnis der Erfindung und sollen den Schutzumfang nicht einschränken.

### Bezugszeichenliste

Es bezeichnen:
- 1: Ventilgehäuse
- 2: Ventilhülse
- 3: Dynamische Dichtungen
- 4: Antrieb
- 5: Elektromotor
- 6: Gewindespindeltrieb
- 7: zentraler Ventilkörper
- 10: Strömungskanal
- 12: Fluideintrittsöffnung
- 13: axiale Stirnseite
- 14: Fluidaustrittsöffnung
- 15: axiale Stirnseite
- 21: zylindrisch innere Wand der Ventilhülse 2
- 22: Einströmöffnung
- 23: Fluiddurchtrittsraum
- 24: Ausströmöffnung
- 25: Speiche
- 25': Speiche
- 26: Nabe
- 26': zentrale Bohrung
- 27: Ventilsitzfläche
- 30: Dichtung
- 32: Dichtung
- 40: Aktuator
- 41: Betätigungsstange
- 42: Koppelabschnitt
- 43: Umfangsflansch
- 44: Faltenbalg
- 45: Gleitlager
- 46: Gleitlager
- 47: Innenraum
- 60: becherartiges Gehäuse
- 61: radial innere Seite der Gehäusewand
- 62: Boden des becherartigen Gehäuses 60
- 62': Spindellauffläche
- 63: Tellerfeder
- 64: Tellerfeder
- 65: Tellerfeder
- 66: Tellerfeder
- 67: Tellerfeder
- 68: Tellerfeder
- 69: Stützring
- 70: Nut
- 71: Verschlusskörper
- 72: Ventilsitz
- 74: Radialspeiche
- 76: Lauffläche des Gehäuses
- 100: zylindrischer Eingangsabschnitt
- 101: Innenumfangswand
- 102: Abschnitt des Strömungskanals 10
- 106: Strömungskanalabschnitt

- X: Ventillängsachse

## Patentansprüche

1. Koaxialventil mit
- einem Ventilgehäuse (1), das zumindest eine Fluideintrittsöffnung (12) und zumindest eine Fluidaustrittsöffnung (14) sowie einen diese miteinander verbindenden Strömungskanal (10) aufweist;
- einer rohrförmigen Ventilhülse (2), die in einem Abschnitt des Strömungskanals (10) axial verfahrbar vorgesehen ist und die eine Einströmöffnung (22) sowie eine Ausströmöffnung (24) für das Fluid aufweist, die beide in den Strömungskanal (10) münden;
- einem im Ventilgehäuse (1) vorgesehenen Verschlusskörper (71), der koaxial zur Ventilhülse (2) angeordnet ist und der ausgebildet ist, um die Einströmöffnung (22) oder die Ausströmöffnung (24) der Ventilhülse (2) zu verschließen,
- einem Antrieb (4) zum axialen Verfahren der Ventilhülse (2), und
- einem axial verfahrbaren Aktuator (40), der koaxial zur Ventilhülse (2) angeordnet und vom Antrieb (4) antreibbar ist, wobei der Aktuator (40) eine Aktuatorstange (41) umfasst, wobei der Antrieb (4) koaxial im Strömungskanal (10) angeordnet und von diesem umgeben ist,
wobei der Antrieb (4) einen Elektromotor (5) und einen Gewindetrieb (6), der entweder ein Gewindespindeltrieb, Kugelgewindetrieb oder Planetenrollengewindetrieb ist, aufweist, **dadurch gekennzeichnet, dass** ein erstes Ende der Aktuatorstange (41) mit der Ventilhülse (2) fixiert ist, wobei ein zweites Ende der Aktuatorstange (41) mit dem Gewindetrieb (6) verbunden ist,
wobei der Antrieb (4) in radialer Richtung zwischen der Aktuatorstange (41) und dem Strömungskanal (10) angeordnet ist, und wobei ein Faltenbalg (44) die Betätigungsstange (41) umgibt und diese gegenüber der äußeren Umgebung abdichtet.

2. Koaxialventil nach Anspruch 1,
**dadurch gekennzeichnet, dass** der Aktuator (40) in Axialrichtung federnd gelagert ist, wobei die Federvorspannung in Richtung auf die Ventilhülse (2) wirkt.

3. Koaxialventil nach einem der vorhergehenden Ansprüche,
**dadurch gekennzeichnet,**
**dass** die Ventilhülse (2) axial verfahrbar und vorzugsweise verdrehgesichert gelagert ist.

4. Koaxialventil nach einem der vorhergehenden Ansprüche,
**dadurch gekennzeichnet,**
**dass** der Strömungskanal (10) einen bezüglich der Fluideintrittsöffnung (12) und der Fluidaustrittsöffnung (14) radial weiter außen liegenden ringförmigen Kanalabschnitt (104) aufweist, der sich in Axialrichtung entlang des Außenumfangs eines den Antrieb (4) aufnehmenden zentralen Ventilkörpers (7) erstreckt.

5. Koaxialventil nach einem der vorhergehenden Ansprüche, **dadurch gekennzeichnet, dass** ein Innenraum (47) des zentralen Ventilkörpers (7), in dem der Antrieb (4) und der Aktuator (40) vorgesehen sind, gegenüber dem Strömungskanal (10) abgedichtet ist.

## Claims

1. A coaxial valve comprising:
a valve housing (1) which has at least one fluid inlet opening (12) and at least one fluid outlet opening (14) and a flow channel (10) connecting these to one another;
a tubular valve sleeve (2), which is axially displaceable in a section of the flow channel (10) and which has an inflow opening (22) and an outflow opening (24) for the fluid, which both open into the flow channel (10);
a closure body (71), which is provided in the valve housing (1) and is arranged coaxially with the valve sleeve (2) and which is designed to close the inflow opening (22) or the outflow opening (24) of the valve sleeve (2);
a drive (4) for the axial movement of the valve sleeve (2), and
an axially displaceable actuator (40), which is arranged coaxially with the valve sleeve (2) and can be driven by the drive (4), wherein the actuator (40) comprises an actuator rod (41),
wherein the drive (4) is arranged coaxially in the flow channel (10) and is surrounded by it,
wherein the drive (4) has an electric motor (5) and a spindle drive (6), which is a threaded spindle drive, a ball screw or a planetary roller screw drive,
**characterized in that** a first end of the actuator rod (41) is fixed to the valve sleeve (2),
wherein a second end of the actuator rod (41) is coupled with the spindle drive (6),
wherein the drive (4) is arranged in a radial direction between the actuator rod (41) and the flow channel (10), and
wherein a bellows (44) surrounds the actuator rod (41) and seals it to the external environment.

2. The coaxial valve according to claim 1,
**characterized in that**,
the actuator (40) is spring-loaded in axial direction, wherein the spring preload acts in the direction of the valve sleeve (2).

3. The coaxial valve according to one of the preceding claims,
**characterized in that**,
the valve sleeve (2) is axially displaceable and is preferably supported in a non-rotating manner.

4. The coaxial valve according to one of the preceding claims,
**characterized in that**,
the flow channel (10) has an annular channel section (104), which is arranged radially further outboard with respect to the fluid inlet opening (12) and the fluid outlet opening (14) and which extends in axial direction along an external circumference of a central valve body (7), in which the drive (4) is provided.

5. The coaxial valve according to one of the preceding claims,
**characterized in that**,
an interior space (47) of the central valve body (7), in which the drive (4) and the actuator (40) are provided, is sealed with respect to the flow channel (10).

## Revendications

1. Soupape coaxiale comprenant
- un boîtier de soupape (1) qui présente au moins une ouverture d'entrée de fluide (12) et au moins une ouverture de sortie de fluide (14) ainsi qu'un canal d'écoulement (10) qui les relie l'une à l'autre,
- une douille de soupape (2) tubulaire qui est prévue axialement déplaçable dans une partie dudit canal d'écoulement (10) et présente une ouverture d'admission (22) ainsi qu'une ouverture d'échappement (24), lesquelles débouchent toutes les deux dans le canal d'écoulement (10),
- un corps de fermeture (71) prévu dans le boîtier de soupape (1), lequel corps est disposé coaxialement par rapport à ladite douille de soupape (2) et conçu de manière à fermer l'ouverture d'admission (22) ou l'entrée d'échappement (24) de la douille de soupape (2),
- un entraînement (4) servant à déplacer axialement la douille de soupape (2) et
- un actionneur (40) axialement déplaçable qui est disposé coaxialement par rapport à la douille de soupape (2) et peut être entraîné par ledit entraînement (4), l'actionneur (40) comprenant une tige d'actionneur (41), l'entraînement (4) étant disposé dans le canal d'écoulement (10) et entouré par celui-ci,
l'entraînement (4) présentant un moteur électrique (5) et un mécanisme d'entraînement par vis (6) consistant en un entraînement par broche filetée, un entraînement par vis à billes ou en un entraînement par vis à rouleaux planétaires,
**caractérisée en ce qu'**une première extrémité de la tige d'actionneur (41) est fixée à la douille de soupape (2),
une deuxième extrémité de la tige d'actionneur (41) étant reliée au mécanisme d'entraînement par vis (6),
l'entraînement (4) étant disposé dans la direction radiale entre la tige d'actionneur (41) et le canal d'écoulement (10), et
un soufflet plissé (44) entourant la tige d'actionnement (41) et assurant l'étanchéité de celle-ci par rapport à l'environnement extérieur.

2. Soupape coaxiale selon la revendication 1,
**caractérisée en ce que** l'actionneur (40) est monté sur ressort dans la direction axiale, la précontrainte du ressort agissant dans la direction de la douille de soupape (2).

3. Soupape coaxiale selon l'une des revendications précédentes,
**caractérisée en ce que**
la douille de soupape (2) est montée déplaçable axialement et préférentiellement bloquée en rotation.

4. Soupape coaxiale selon l'une des revendications précédentes,
**caractérisée en ce que**
le canal d'écoulement (10) présente une partie de canal (104) annulaire située radialement plus loin vers l'extérieur que l'ouverture d'entrée de fluide (12) et l'ouverture de sortie de fluide (14), laquelle partie de canal s'étend dans la direction axiale le long de la circonférence extérieure d'un corps de soupape (7) central recevant l'entraînement (4).

5. Soupape coaxiale selon l'une des revendications précédentes,
**caractérisée en ce qu'**un espace intérieur (47) du corps de soupape (7) central, à l'intérieur duquel sont prévus l'entraînement (4) et l'actionneur (40), est rendu étanche par rapport au canal d'écoulement (10).
